# EUROPÄISCHE PATENTANMELDUNG

(11) **EP 2 143 925 A1**
(43) Veröffentlichungstag der Anmeldung: **13.01.2010**
(21) Anmeldenummer: 09165326.1
(22) Anmeldetag: 13.07.2009
(51) Int. Cl.: F02F 1/24, F02B 37/18, F01N 13/00, F02B 37/02

(54) **Anordnung mit Zylinderkopf und Turbine**

(30) Priorität: 14.07.2008 DE 102008033043; 11.07.2008 EP 08104729
(71) Anmelder: Ford Global Technologies, LLC, Dearborn, MI 48126 (US)
(72) Erfinder: Kuhlbach, Kai, 51427, Bergisch Gladbach (DE)
(74) Vertreter: Drömer, Hans-Carsten

(57) **Zusammenfassung**

Die Erfindung betrifft eine Brennkraftmaschine mit wenigstens zwei Zylindern und einem Zylinderkopf (1, 100) mit einem Abgaskrümmer (3), der eine an die Zylinderkopfaußenseite führende Gesamtabgasleitung (4, 60) aufweist, welche die von den Zylinder kommenden Abgasleitungen (30) und flüssigkeitsgekühlten Abgaswege (50) zusammenführt und an die in Strömungsrichtung fluchtend ein Eintrittsbereich (7, 70) eines Turbinengehäuses (11, 12, 120) einer vom Abgas angetriebenen Turbine (2, 200) anschließt,
dadurch gekennzeichnet, daß die Gesamtabgasleitung (6, 60) in Längsrichtung des Zylinderkopfes mittig zu den Zylindern angeordnet ist,
- die Turbinenachse oberhalb der Gesamtabgasleitung angeordnet ist und
- die der Brennkraftmaschine zugewandte, stromabwärts des Eintrittsbereichs (7, 70) gelegene Außenwand des Turbinengehäuses (11, 12, 120) im Wesentlichen bis an die Gesamtabgasleitung (4, 40) heranreicht.

## Beschreibung

Die Erfindung betrifft eine Brennkraftmaschine mit wenigstens zwei Zylindern und einem Zylinderkopf (1, 100) mit einem Abgaskrümmer (3), der eine an die Zylinderkopfaußenseite führende Gesamtabgasleitung (4, 60) aufweist, welche die von den Zylinder kommenden Abgasleitungen (30) und flüssigkeitsgekühlten Abgaswege (50) zusammenführt und an die in Strömungsrichtung fluchtend ein Eintrittsbereich (7, 70) eines Turbinengehäuses (11, 12, 120 ) einer vom Abgas angetriebenen Turbine (2, 200) anschließt,
**dadurch gekennzeichnet, daß** die Gesamtabgasleitung (6, 60) in Längsrichtung des Zylinderkopfes mittig zu den Zylindern angeordnet ist,
- die Turbinenachse oberhalb der Gesamtabgasleitung angeordnet ist und
- die der Brennkraftmaschine zugewandte, stromabwärts des Eintrittsbereichs (7, 70) gelegene Außenwand des Turbinengehäuses (11, 12, 120) im Wesentlichen bis an die Gesamtabgasleitung (4, 40) heranreicht.

Im Rahmen der vorliegenden Erfindung umfaßt der Begriff Brennkraftmaschine Dieselmotoren, Ottomotoren, aber auch Hybrid-Brennkraftmaschinen.

Brennkraftmaschinen verfügen über einen Zylinderblock und einen Zylinderkopf, die zur Ausbildung der einzelnen Zylinder d. h. Brennräume miteinander verbunden werden.

Der Zylinderblock weist zur Aufnahme der Kolben bzw. der Zylinderrohre eine entsprechende Anzahl an Zylinderbohrungen auf. Die Kolben werden axial beweglich in den Zylinderrohren geführt und bilden zusammen mit den Zylinderrohren und dem Zylinderkopf die Brennräume der Brennkraftmaschine aus.

Der Zylinderkopf dient häufig auch zur Aufnahme des Ventiltriebs. Um den Ladungswechsel zu steuern, benötigt eine Brennkraftmaschine Steuerorgane und Betätigungseinrichtungen zur Betätigung dieser Steuerorgane. Im Rahmen des Ladungswechsels erfolgt das Ausschieben der Verbrennungsgase über die Auslaßöffnungen und das Füllen des Brennraums d. h. das Ansaugen des Frischgemisches bzw. der Frischluft über die Einlaßöffnungen. Zur Steuerung des Ladungswechsels werden bei Viertaktmotoren nahezu ausschließlich Hubventile als Steuerorgane verwendet, die während des Betriebs der Brennkraftmaschine eine oszillierende Hubbewegung ausführen und auf diese Weise die Ein- und Auslaßöffnungen freigeben und verschließen. Der für die Bewegung der Ventile erforderliche Ventilbetätigungsmechanismus einschließlich der Ventile selbst wird als Ventiltrieb bezeichnet.

Es ist die Aufgabe des Ventiltriebs die Einlaß- und Auslaßöffnungen der Brennkammer rechtzeitig freizugeben bzw. zu schließen, wobei eine schnelle Freigabe möglichst großer Strömungsquerschnitte angestrebt wird, um die Drosselverluste in den ein- bzw. ausströmenden Gasströmungen gering zu halten und eine möglichst gute Füllung des Brennraumes mit Frischgemisch bzw. ein effektives d. h. vollständiges Abführen der Abgase zu gewährleisten. Nach dem Stand der Technik werden daher auch zunehmend zwei oder mehr Einlaß- bzw. Auslaßöffnungen vorgesehen.

Die Einlaßkanäle, die zu den Einlaßöffnungen führen, und die Auslaßkanäle bzw. Abgasleitungen, die sich an die Auslaßöffnungen anschließen, sind nach dem Stand der Technik zumindest teilweise im Zylinderkopf integriert. Sind zwei oder mehr Auslaßöffnungen je Zylinder vorgesehen, werden die Abgasleitungen jedes Zylinders häufig - innerhalb des Zylinderkopfes - zu einer dem Zylinder zugehörigen Teilabgasleitung zusammengeführt, bevor diese Teilabgasleitungen dann zu einer Gesamtabgasleitung zusammengeführt werden. Die Zusammenführung der Abgasleitungen bis hin zu der Gesamtabgasleitung wird im allgemein und im Rahmen der vorliegenden Erfindung als Abgaskrümmer bzw. Krümmer bezeichnet. Dabei können die Abgasleitungen der Zylinder auch gruppenweise zu zwei oder mehr Gesamtabgasleitungen unter Ausbildung mehrerer Krümmer zusammengeführt werden.

Stromabwärts des Krümmers werden die Abgase dann gegebenenfalls einer Turbine, insbesondere einer Turbine eines Abgasturboladers, und/oder einem oder mehreren Abgasnachbehandlungssystemen zugeführt.

Dabei ist man zum einen bemüht, die Turbine möglichst nahe am Auslaß der Brennkraftmaschine anzuordnen, um auf diese Weise die Abgasenthalpie der heißen Abgase, die maßgeblich vom Abgasdruck und der Abgastemperatur bestimmt wird, optimal nutzen zu können und ein schnelles Ansprechverhalten des Turboladers zu gewährleisten. Zum anderen soll auch der Weg der heißen Abgase zu den verschiedenen Abgasnachbehandlungssystemen möglichst kurz sein, damit den Abgasen wenig Zeit zur Abkühlung eingeräumt wird und die Abgasnachbehandlungssysteme möglichst schnell ihre Betriebstemperatur bzw. Anspringtemperatur erreichen, insbesondere nach einem Kaltstart der Brennkraftmaschine.

In diesem Zusammenhang ist man daher grundsätzlich bemüht, die thermische Trägheit des Teilstücks der Abgasleitung zwischen Auslaßöffnung am Zylinder und Abgasnachbehandlungssystem bzw. zwischen Auslaßöffnung am Zylinder und Turbine zu minimieren, was durch Reduzierung der Masse und der Länge dieses Teilstückes erreicht werden kann. Geeignete Werkstoffe sind dabei ebenfalls zielführend.

Im Hinblick auf den Einsatz eines Turboladers wird angestrebt, den Druckverlust in der Abgasströmung bis zum Eintritt in die Turbine möglichst gering zu halten, was durch eine geeignete Strömungsführung und wiederum durch eine weitestgehende Verkürzung der zu überbrückenden Wegstrecke d. h. der relevanten Abgasleitungen erreicht werden kann. Zur Verbesserung des Ansprechverhaltens sollte das Abgasvolumen in den Abgasleitungen stromaufwärts der Turbine möglichst gering sein.

Um die zuvor genannten Ziele zu erreichen, wird nach US 5094704 der Abgaskrümmer vollständig im Zylinderkopf integriert. Ein derartiger Zylinderkopf zeichnet sich durch eine sehr kompakte Bauweise aus, wobei die Gesamtwegstrecke der Abgasleitungen des Abgaskrümmers und das Volumen der Abgasleitungen stromaufwärts der Turbine durch die Integration minimiert werden. Die Verwendung eines derartigen Zylinderkopfes führt zudem zu einer geringeren Anzahl an Bauteilen und folglich zu einer Verringerung der Kosten, insbesondere der Montage- und Bereitstellungskosten. Ein dichtes Packaging der Antriebseinheit wird durch die kompakte Bauweise ermöglicht. Ein Zylinderkopf mit mindestens einem integrierten Abgaskrümmer ist daher auch ein Gegenstand der vorliegenden Erfindung.

Ein Nachteil der aufgeladenen Motoren, hier bei aufgeladen Motoren mittels Turbolader, sind die hohen Kosten für den Abgaskrümmer und das Turboladergehäuse. Da beide Teile sehr hohe Temperaturen aushalten müssen, sind sie üblicherweise aus Stahlguß oder Stahlblech gefertigt. Die entsprechenden Stahlqualitäten enthalten in der Regel einen hohen Legierungsanteil, wobei in Regel ein hoher Anteil an Nickel zulegiert wird. So enthalten gegossene Turboladergehäuse Nickelanteile bis zu 37%. Nachteilig ist insbesondere der hohe Preis für Nickel, der in der letzten Zeit kontinuierlich steigt.

Eine Möglichkeit diese Nachteile zu vermindern, ist es, den Abgaskrümmer mit dem Zylinderkopf einstückig auszuführen. Dies gilt sowohl für Abgaskrümmer aus Aluminium als auch aus Grauguß. Diese Integration ist bekannt und z. B. in der EP 1006272 B1 oder in der EP-Anmeldung 07110193.5 beschrieben.

Aus EP1536141 ist bekannt. das Gehäuse des Turboladers, die Abgassammelleitung und den Zylinderkopf gemeinsam in einem Stück zu gießen. Dadurch können Wärmeverluste auf dem Weg zum Turbolader reduziert werden, jedoch ist die Integration alleine nicht zielführend.

Aufgabe der Erfindung ist es daher auch, die oben beschriebenen Nachteile noch weiter zu vermindern bzw. teilweise beschriebene Vorteile weiter zu verbessern und einen möglichst kostengünstigen und kompakten Verbrennungsmotor herzustellen.

Turboladergehäuse bestehen üblicherweise aus Stahlguß für das Gehäuse der Turbinenseite und Aluminiumguß für das Gehäuse der Kompressorseite. Vorteilhaft im Sinne der Erfindung ist es, zumindest das Gehäuse für die Kompressorseite einstückig mit dem Zylinderkopf und Abgaskrümmer auszuführen.

Vorstellbar ist es aber auch, das Gehäuse oder zumindest Teile des Gehäuses für die Turbinenseite ebenfalls einstückig mit dem Gehäuse für die Kompressorseite, dem Abgaskrümmer und dem Zylinderkopf auszuführen. Es ist dann sinnvoll, das Gehäuse zu kühlen, z. B. durch Einbindung in den Kühlkreislauf der Brennkraftmaschine.

Diese sehr kompakte Ausgestaltung ermöglicht es, den Turbolader sehr nahe an den Auslaßventilen anzuordnen. Die wärmeabgebende Fläche und das Volumen der Kanäle vom Zylinder bis zum Turbolader werden so deutlich reduziert. Dies bedeutet einen geringeren Entalphieverlust verglichen mit bekannten Anwendungen und damit ein schnellere Ansprechen des Turboladers z. B. bei Lastwechseln. Dies vermindert drastisch das sogenannte Turboloch.

Bevorzugt werden zumindest Teile des Abgaskrümmers und/oder Teile des Turboladergehäuses gekühlt. Dadurch kann eine Absenkung der Abgastemperaturen insbesondere bei Vollast erreicht werden. Heutzutage wird häufig bei Vollast das Verbrennungsgemisch angefettet (Lambda < 1) um die Verbrennungstemperaturen zu senken und damit die Abgastemperaturen zu senken, damit nicht der Abgaskrümmer oder der Turbolader durch unzulässig hohe Temperaturen geschädigt werden. Gegenüber den zur Zeit ausgeführten Turbomotoren bedeutet dies eine signifikante Verringerung des Kraftstoffverbrauchs bzw. CO₂ Ausstoß pro Kilometer für den Ottomotor. Sinnvoll ist es auch deshalb, zumindest Teile des Abgaskrümmers und Teile des Turboladers bzw. des Turboladergehäuses in den Kühlkreislauf einer wassergekühlten Brennkraftmaschine einzubeziehen. Dazu wird das Bauteil mit mindestens einem geeigneten Kühlkanal versehen.

Vorteilhafterweise wird das erfindungsgemäße Bauteil bestehend aus Zylinderkopf, Abgaskrümmer und zumindest Teilen eines Turboladergehäuses einstückig aus Aluminiumguß hergestellt. Dadurch wird eine besonders hohe Gewichtsersparnis im Vergleich zu konventionellen Designs erreicht, bei denen der Abgaskrümmer und das Turboladergehäuse aus Stahl bestehen.

Allerdings ist es auch denkbar, das erfindungsgemäße Bauteil z. B. aus Grauguß oder anderen Gußmaterialien herzustellen, da die Vorteile in Bezug auf Turboladeransprechverhalten und Abgastemperaturverhalten unabhängig vom Gußmaterial erhalten bleiben.

Dadurch, daß zumindest Teile des Abgaskrümmers und/oder des Turboladers bzw. Turboladergehäuses in den Kühlkreislauf einbezogen sind, werden, im Vergleich zum konventionellen Design, thermisch besonders belastete Bauteile mit durch den Kühlkreislauf gekühlt. Dies führt vorteilhafterweise beim Kaltstart einer Brennkraftmaschine zu besonders schneller Erwärmung des Kühlmittels, damit zu einer schnellerer Aufwärmung der Brennkraftmaschine und, sofern eine Kühlmittelbetriebene Heizung eines Fahrgastraumes eines Fahrzeugs vorgesehen ist, zu einer schnelleren Aufheizung dieses Fahrgastraumes.

Das beschriebene Bauteil weist erfindungsgemäß deutlich kürzere Abgaswege und damit eine deutlich verringerte wärmetauschende Fläche im Vergleich zum konventionellen Design auf. Schließt sich nun an den Turbolader eine katalytische Nachbehandlung (Katalysator) der Abgase an, so werden im Falle eines sogenannten Kaltstarts die Abgase wesentliche schneller die Temperaturen erreichen, die nötig sind, die katalytischen Reaktionen zu starten. Dies bedeutet weniger Verbrennungsgemischanfettung im Vergleich zum bekannten Design.

Vorteilhaft ist das beschrieben Bauteil auch in Bezug auf das Layout eines Motorraumes. Da die thermisch besonders belasteten Bauteile, wie bereits beschrieben, gekühlt werden, entfallen heute übliche Abschirmungen und Hitzebleche, die in bekannter Weise konventionelle Abgaskrümmer und/oder Turbolader abschirmen, damit benachbarte Bauteile nicht durch zu hohe Temperaturen gestört oder beschädigt werden.

Auch reduziert die beschriebene Anordnung deutlich den benötigten Bauraum für eine Brennkraftmaschine im Motorraum eines Fahrzeugs in vorteilhafter Weise.

Bevorzugt ermöglicht die erfindungsgemäße Anordnung die Integration weiterer Komponenten. So ist es z. B. möglich, Frischluftleitungen zum und vom Kompressor besser anzubinden. Z. B. ist es möglich, eine Frischluftleitung in einen Zylinderkopfdeckel zu integrieren und die kurze Distanz bis zum Kompressorgehäuse mittels eines Kanals zu überbrücken, wobei z. B. dieser Kanal auch Bestandteil des erfindungsgemäßen Zylinderkopfbauteils sein kann.

Erfindungsgemäß kann z. B. das Überdruckventil eines Turboladers, das sogenannte Waste-gate, in das erfindungsgemäße Bauteil integriert werden. Dieses Waste-gate regelt den Abgasüberdruck und damit die Turbine eines Turboladers. Die sonst übliche zusätzliche Abgasleitung vom Waste-gate zum Abgassystem kann auch in das erfindungsgemäße Bauteil integriert sein.

Vorteilhafterweise wird zusätzlich zu den bereits erwähnten integrierten Kühlmittelkanälen mindestens einen Ölkanal in das erfindungsgemäße Bauteil integriert. Z. B. läßt sich so die Ölversorgung für die Turboladerwelle sicherstellen. Es ist aber auch vorstellbar, daß das Öl durch integrierte Kanäle während eines Kaltstarts besonders schnell aufgeheizt wird und somit schneller als bisher üblich die gewünschte Betriebstemperatur erreicht.

Insbesondere kann auch die Turbinenseite bzw. das Turbinengehäuse eines Turboladers besonders gekühlt werden, so daß z. B. auch das Turbinengehäuse aus Aluminium gefertigt sein kann und Teil des erfindungsgemäßen Bauteils wird. Die Turboladerwelle mit Turbinen- und Kompressorrad könnte dann als separates Bauteil z. B. in Form einer Kassette eingeschoben werden.

Insbesondere die motornahe Anordnung der Turbine am bzw. die Verbindung der Turbine mit dem Zylinderkopf gestaltet sich - auch aufgrund der beengten Platzverhältnisse - schwierig. Nach dem Stand der Technik wird die Turbine im Eintrittsbereich mit einem Flansch ausgestattet und mit vier oder mehr Schraubenverbindungen am Zylinderkopf befestigt. Hierzu werden vier oder mehr Butzen zum Durchführen der Schrauben rings um den Eintrittsbereich der Turbine herum angeordnet, wobei die Butzen häufig regelmäßig zueinander beabstandet und in der Art angeordnet sind, dass mindestens zwei Butzen auf der dem Laufrad zugewandten Seite des Eintrittsbereichs und mindestens zwei Butzen auf der dem Laufrad abgewandten Seite des Eintrittsbereichs angeordnet sind.

Bei der konstruktiven Auslegung des Turbinengehäuses muß darauf geachtet werden, dass für die Montage von Turbine und Zylinderkopf um die Butzen herum ausreichend Platz für die Montagewerkzeuge vorgesehen wird, damit diese mit den Schrauben in Eingriff gebracht werden können. Diese konstruktive Anforderung an das Turbinengehäuse führt dazu, dass das Gehäuse vergleichsweise groß d. h. voluminös dimensioniert und das Laufrad der Turbine weit beabstandet zum Eintrittsbereich angeordnet wird, was eine Vielzahl von Nachteilen mit sich bringt.

Das große und voluminöse Gehäuse benötigt den entsprechenden Bauraum, was einem dichten Packaging entgegen steht. Zudem ist ein derartiges Gehäuse entsprechend schwer, was dem grundsätzlichen Ziel der Gewichtsreduzierung im Fahrzeugbau entgegen steht und eine entsprechende Dimensionierung der Schraubenverbindungen zur sicheren Befestigung des Gehäuses erfordert.

Auch die Herstellungskosten steigen infolge des erhöhten Materialbedarfs erheblich, da der für das thermisch hochbelastete Turbinengehäuse verwendete - häufig nickelhaltige - Werkstoff vergleichsweise kostenintensiv ist, insbesondere im Vergleich zu dem für den Zylinderkopf verwendeten Werkstoff; beispielweise Aluminium.

Hinsichtlich der Aufladung der Brennkraftmaschine ist es ein erheblicher Nachteil, dass das Laufrad der Turbine weit beabstandet zum Eintrittsbereich angeordnet ist, wodurch sich die Wegstrecke der heißen Abgase vom Eintrittsbereich bis hin zum Laufrad verlängert und sich das Abgasvolumen stromaufwärts des Laufrades vergrößert. Hierdurch verschlechtert sich das Ansprechverhalten einer Abgasturboaufladung und die thermische Trägheit der Abgaszuführung vergrößert sich. Zudem weist ein großes Turbinengehäuse eine entsprechend große Gehäuseoberfläche auf, über die eine entsprechend große Wärmemenge abgeführt und damit den Abgasen entzogen wird. Die für die Aufladung maßgebliche Abgasenthalpie am Eintritt in das Turbinenlaufrad nimmt infolge eines grundsätzlich ungewollten Druckund Temperaturverlustes in der Abgasströmung bis hin zum Laufrad ab.

Ein gegebenenfalls vorgesehenes Hitzeschild zur Abschirmung des Turbinengehäuses gegenüber anderen Bauteilen ist von entsprechender Größe.

Vor dem Hintergrund des oben Gesagten ist es eine weitere Aufgabe der vorliegenden Erfindung, eine Anordnung gemäß dem Oberbegriff des Anspruchs, die hinsichtlich der oben genannten Zielsetzungen, insbesondere hinsichtlich der Aufladung, optimiert ist.

Eine weitere Teilaufgabe der vorliegenden Erfindung ist es, eine Verwendung für eine derartige Anordnung aufzuzeigen.

Gelöst wird die erste Aufgabe durch eine Anordnung mit einem Zylinderkopf, der mindestens einen integrierten Abgaskrümmer zum Abführen von Abgasen über eine aus dem Zylinderkopf austretende Gesamtabgasleitung aufweist, und einer Turbine, die ein um eine Drehachse drehbares Laufrad und einen Eintrittsbereich zum Zuführen der Abgase aufweist, bei der die Turbine mit dem Zylinderkopf mittels Schrauben in der Art verbunden ist, daß der Eintrittsbereich an die Gesamtabgasleitung anschließt, wozu der Zylinderkopf um die Gesamtabgasleitung herum und zur Gesamtabgasleitung beabstandet angeordnete Bohrungen zur Aufnahme der Schrauben aufweist und die Turbine um den Eintrittsbereich herum angeordnete Butzen zum Durchführen der Schrauben aufweist, wobei
- die Butzen und die Bohrungen miteinander fluchten,
- zur Ausbildung von mindestens drei Schraubenverbindungen mindestens drei Bohrungen und mindestens drei Butzen zur Aufnahme von mindestens drei Schrauben vorgesehen sind, und
- mindestens eine Schraubenverbindung auf der dem Laufrad zugewandten Seite des Eintrittsbereichs vorgesehen ist,
und die dadurch gekennzeichnet ist, daß
- die Butze der mindestens einen Schraubenverbindung, die auf der dem Laufrad zugewandten Seite des Eintrittsbereichs vorgesehen ist, über die Drehachse des Laufrades hinaus nach außen hervorsteht.

Erfindungsgemäß wird die mindestens eine Schraubenverbindung, die auf der dem Laufrad zugewandten Seite des Eintrittsbereichs liegt, nach außen verlängert, indem die Butze dieser Verbindung in Richtung ihrer Längsachse verlängert wird. Dadurch kommt auch der Schraubenkopf dieser Schraubenverbindung weiter außen zu liegen, so dass das Montagewerkzeug zumindest in Bezug auf diese Schraubenverbindung nicht mehr bis in die unmittelbare Nähe des Eintrittsbereichs der Turbine einführbar sein muß, um mit der Schraube dieser Schraubenverbindung im Rahmen der Montage in Eingriff gebracht zu werden.

Erreicht wird dies dadurch, daß die Butze dieser Verbindung in der Art ausgebildet wird, daß die Butze über die Drehachse des Laufrades hinaus nach außen hervorsteht, d. h. in der Art, daß das freie Ende dieser Butze auf der dem Zylinderkopf abgewandten Seite einer gedachten Ebene, welche durch die Drehachse des Laufrades geht und senkrecht auf den Schraubenver-bindungen steht, zu liegen kommt.

Insbesondere gestattet die erfindungsgemäße Ausbildung der mindestens einen Schraubenverbindung eine motornahe Anordnung des Turbinenlaufrades am Zylinderkopf bzw. an der Gesamtabgasleitung, wodurch sich die Wegstrecke für die heißen Abgase vom Eintrittsbereich der Turbine bis hin zum Laufrad der Turbine erheblich verkürzt. Dadurch wird sowohl der Druck- und Temperaturverlust im Abgas als auch das Abgasvolumen stromaufwärts des Laufrades vermindert, so dass die nutzbare Abgasenthalpie erhöht und das Ansprechverhalten verbessert werden.

Dadurch, dass kein Platz für Montagewerkzeuge auf der dem Laufrad zugewandten Seite des Eintrittsbereichs vorgesehen werden muß, kann das Gehäuse kompakter und vergleichsweise klein ausgeführt werden. Der Schwerpunkt der Turbine weist erfindungsgemäß einen geringeren Abstand zum Zylinderkopf auf.

Das Gehäuse wird kleinvolumiger, benötigt entsprechend weniger Bauraum, was ein dichtes Packaging ermöglicht, und weist ein geringeres Gewicht auf, weshalb die Schraubenverbindungen zur sicheren Befestigung des Gehäuses kleiner dimensioniert werden können. Infolge des geringeren Materialbedarfs sinken auch die Herstellungskosten. Ein gegebenenfalls vorgesehenes Hitzeschild kann entsprechend dem kleineren Turbinengehäuse ebenfalls kleiner dimensioniert werden.

Der Zylinderkopf der erfindungsgemäßen Anordnung verfügt über mindestens einen vollständig im Zylinderkopf integrierten Abgaskrümmer, weshalb die Wegstrecken der einzelnen Abgasleitungen bis hin zur Gesamtabgasleitung vergleichsweise kurz sind. Der erfindungsgemäße Zylinderkopf grenzt sich insofern von Konzepten ab, bei denen der Zylinderkopf über einen nur teilweise integrierten Krümmer verfügt.

Weist der Zylinderkopf drei oder mehr Zylinder auf und führen nur die Abgasleitungen von zwei Zylindern innerhalb des Zylinderkopfes zu einer Gesamtabgasleitung zusammen, handelt es sich ebenfalls um einen erfindungsgemäßen Zylinderkopf.

Ausführungsformen des Zylinderkopfes mit beispielsweise vier in Reihe angeordneten Zylindern, bei denen die Abgasleitungen der außenliegenden Zylinder und die Abgasleitungen der innenliegenden Zylinder jeweils zu einer Gesamtabgasleitung zusammengeführt werden, sind ebenfalls erfindungsgemäße Zylinderköpfe.

Vorteilhaft sind aber Ausführungsformen, bei denen die Abgasleitungen sämtlicher Zylinder des Zylinderkopfes innerhalb des Zylinderkopfes zu einer einzigen Gesamtabgasleitung zusammenführen.

Die Turbine kann mit einer variablen Turbinengeometrie ausgestattet werden, die eine weitergehende Anpassung an den jeweiligen Betriebspunkt der Brennkraftmaschine durch Verstellen der Turbinengeometrie bzw. des wirksamen Turbinenquerschnittes gestattet. Alternativ oder zusätzlich kann eine Leitung vorgesehen werden, mit der bei Umgehung der Turbine Abgas abgeblasen wird.

Vorteilhaft sind Ausführungsformen der Turbine, bei denen stromaufwärts des Laufrades Leitschaufeln zur Beeinflussung der Strömungsrichtung angeordnet sind. Im Gegensatz zu den Laufschaufeln des umlaufenden Laufrades rotieren die Leitschaufeln nicht mit der Welle der Turbine mit.

Verfügt die Turbine über eine feste unveränderliche Geometrie, sind die Leitschaufeln nicht nur stationär, sondern zudem völlig unbeweglich d. h. starr fixiert. Wird hingegen eine Turbine mit variabler Geometrie eingesetzt, sind die Leitschaufeln zwar auch stationär angeordnet, aber nicht völlig unbeweglich, sondern um ihre Achse drehbar angeordnet, so dass auf die Anströmung der Laufschaufeln Einfluß genommen werden kann.

Weitere vorteilhafte Ausführungsformen der erfindungsgemäßen Anordnung werden im Zusammenhang mit den Unteransprüchen erörtert.

Vorteilhaft sind Ausführungsformen der Anordnung, bei denen drei Schraubenverbindungen vorgesehen sind. Drei Schraubenverbindungen genügen, um Kräfte und Momente in zufriedenstellender Weise aufzunehmen, da die Turbine ein vergleichsweise geringes Gewicht aufweist und der Schwerpunkt der Turbine erfindungsgemäß näher am Zylinderkopf liegt, so dass die Verbindung im Vergleich zum Stand der Technik kleinere Kräfte und Momente aufzunehmen hat. Mit dem Wegfall einer Schraubenverbindung entfällt auch eine Bohrung zur Aufnahme der Schraube im mechanisch ohnehin hoch belasteten Zylinderkopf.

Vorteilhaft sind Ausführungsformen der Anordnung, bei denen eine Schraubenverbindung auf der dem Laufrad zugewandten Seite des Eintrittsbereichs vorgesehen ist. Da die Schraubenverbindungen, die auf der dem Laufrad abgewandten Seite des Eintrittsbereichs vorgesehen sind, leicht für Montagewerkzeuge zu erreichen sind, muß vorliegend nur die Butze einer einzigen Schraubenverbindungen über die Drehachse des Laufrades hinaus nach außen verlängert werden. Da die verlängerte Butze einen erhöhten Materialbedarf bedingt und damit eine Erhöhung des Gewichts, ist es vorteilhaft, wenn so wenige Butzen wie möglich nach außen verlängert werden.

Vorteilhaft sind Ausführungsformen der Anordnung, bei denen
- der Zylinderkopf mindestens zwei Zylinder aufweist,
- jeder Zylinder mindestens zwei Auslaßöffnungen aufweist, und
- die Abgasleitungen von mindestens zwei Zylindern unter Ausbildung des integrierten Abgaskrümmers innerhalb des Zylinderkopfes zu der Gesamtabgasleitung zusammenführen.

Wie bereits in der Beschreibungseinleitung erwähnt, ist es während des Ausschiebens der Abgase im Rahmen des Ladungswechsels ein vorrangiges Ziel, möglichst schnell möglichst große Strömungsquerschnitte freizugeben, um ein effektives Abführen der Abgase zu gewährleisten, weshalb das Vorsehen von mehr als einer Auslaßöffnung je Zylinder vorteilhaft ist.

Vorteilhaft sind Ausführungsformen der Anordnung, bei denen zunächst die Abgasleitungen der mindestens zwei Auslaßöffnungen je Zylinder zu einer dem Zylinder zugehörigen Teilabgasleitung zusammenführen, bevor diese Teilabgasleitungen zu der Gesamtabgasleitung zusammenführen.

Das stufenweise Zusammenführen der Abgasleitungen via Teilabgasleitungen zu einer Gesamtabgasleitung trägt zu einer kompakteren d. h. weniger voluminösen Bauweise des Zylinderkopfes und damit insbesondere zu einer Gewichtsreduzierung und einem effektiveren Packaging im Motorraum bei. Zudem wird die Gesamtwegstrecke der Abgasleitungen des Abgaskrümmers weiter verkürzt.

Vorteilhaft sind Ausführungsformen der Anordnung, bei denen die Turbine die Turbine eines Abgasturboladers ist. Bei einem Abgasturbolader sind ein Verdichter und eine Turbine auf derselben Welle angeordnet. Der heiße Abgasstrom wird der Turbine zugeführt und entspannt sich unter Energieabgabe in dieser Turbine, wodurch die Welle in Drehung versetzt wird. Die vom Abgasstrom an die Turbine und schließlich an die Welle abgegebene Energie wird für den Antrieb des ebenfalls auf der Welle angeordneten Verdichters genutzt. Der Verdichter fördert und komprimiert die ihm zugeführte Ladeluft, wodurch eine Aufladung der Zylinder bzw. der Brennkraftmaschine erreicht wird.

Die Aufladung dient in erster Linie der Leistungssteigerung der Brennkraftmaschine. Die für den Verbrennungsprozeß benötigte Luft wird dabei verdichtet, wodurch jedem Zylinder pro Arbeitsspiel d. h. pro Arbeitsprozeß eine größere Luftmasse zugeführt werden kann. Dadurch können die Kraftstoffmasse und damit der Mitteldruck pₘₑ gesteigert werden.

Die Aufladung ist daher ein geeignetes Mittel, bei unverändertem Hubraum die Leistung einer Brennkraftmaschine zu steigern oder bei gleicher Leistung den Hubraum zu reduzieren. In jedem Fall führt die Aufladung zu einer Erhöhung der Bauraumleistung und einer günstigeren Leistungsmasse. Bei gleichen Fahrzeugrandbedingungen läßt sich so das Lastkollektiv zu höheren Lasten hin verschieben, wo der spezifische Kraftstoffverbrauch niedriger ist.

Grundsätzlich können zur Verbesserung der Drehmomentcharakteristik der Brennkraftmaschine auch mehrere Turbolader eingesetzt werden, deren Turbinen bzw. Verdichter in Reihe bzw. parallel angeordnet sind.

Vorteilhaft sind Ausführungsformen der Anordnung, bei denen die Turbine eine Radialturbine ist. Bei einer Radialturbine erfolgt die Anströmung der Laufschaufeln des Laufrades im Wesentlichen radial d. h. die Geschwindigkeitskomponente in radialer Richtung ist größer als die axiale Geschwindigkeitskomponente. Der Geschwindigkeitsvektor der Strömung schneidet die Welle der Turbine in einem rechten Winkel, falls die Anströmung exakt radial verläuft.

Um die Laufschaufeln radial anströmen zu können, wird die Zuführung des Abgases vorzugsweise als rundum verlaufendes Spiral- oder Schneckengehäuse ausgebildet, so dass die Anströmung des Abgases zum Turbinenlaufrad radial erfolgt.

Vorteilhaft sind aber auch Ausführungsformen der Anordnung, bei denen die Turbine eine Axialturbine ist. Bei einer Axialturbine erfolgt die Anströmung der Laufradschaufeln im Wesentlichen axial d. h. die Geschwindigkeitskomponente in axialer Richtung ist größer als die radiale Geschwindigkeitskomponente. Der Geschwindigkeitsvektor der Anströmung im Bereich des Laufrades verläuft parallel zur Welle der Turbine, falls die Anströmung exakt axial verläuft.

Die Zuführung des Abgases erfolgt auch bei Axialturbinen häufig mittels Spiral- oder Schneckengehäuse. Grundsätzlich besteht aber bei Axialturbinen die Möglichkeit, das Abgas axial zuzuführen, so dass keine Umlenkung bzw. Richtungsänderung des Abgases stromaufwärts des Laufrades vorgenommen wird bzw. vorgenommen werden muß, was - wie oben beschrieben - unter energetischen Aspekten Vorteile bietet, weil damit ein möglichst energiereicher Abgasstrom an der Turbine bereitgestellt wird.

Vorteilhaft sind Ausführungsformen der Anordnung, bei denen zwischen der Turbine und dem Zylinderkopf eine Dichtung vorgesehen ist. Durch das Vorsehen einer Dichtung wird ein Leckagestrom wirksam verhindert.

Infolge der Integration mindestens eines Abgaskrümmers ist der erfindungsgemäße Zylinderkopf thermisch höher belastet als ein herkömmlicher Zylinderkopf, der mit einem externen Krümmer ausgestattet ist, weshalb höhere Anforderungen an die Kühlung gestellt werden.

Grundsätzlich besteht die Möglichkeit, die Kühlung in Gestalt einer Luftkühlung oder einer Flüssigkeitskühlung auszuführen. Aufgrund der wesentlich höheren Wärmekapazität von Flüssigkeiten gegenüber Luft können mit der Flüssigkeitskühlung wesentlich größere Wärmemengen abgeführt werden als dies mit einer Luftkühlung möglich ist.

Die Flüssigkeitskühlung erfordert die Ausstattung der Brennkraftmaschine bzw. des Zylinderkopfes mit einem Kühlmittelmantel d. h. die Anordnung von das Kühlmittel durch den Zylinderkopf führenden Kühlmittelkanälen. Die Wärme wird bereits im Inneren des Zylinderkopfes an das Kühlmittel, in der Regel mit Additiven versetztes Wasser, abgegeben. Das Kühlmittel wird dabei mittels einer im Kühlkreislauf angeordneten Pumpe gefördert, so daß es im Kühlmittelmantel zirkuliert. Die an das Kühlmittel abgegebene Wärme wird auf diese Weise aus dem Inneren des Zylinderkopfes abgeführt und in einem Wärmetauscher dem Kühlmittel wieder entzogen.

Vorteilhaft sind aus den zuvor genannten Gründen Ausführungsformen der Anordnung, bei denen der Zylinderkopf mit einem Kühlmittelmantel ausgestattet ist.

Vorteilhaft sind dabei Ausführungsformen, bei denen
- der Kühlmittelmantel einen unteren Kühlmittelmantel, der zwischen dem integrierten Abgaskrümmer und einer Montage-Stirnseite des mindestens einen Zylinderkopfes, an der dieser Zylinderkopf mit einem Zylinderblock verbindbar ist, angeordnet ist, und einen oberen Kühlmittelmantel, der auf der dem unteren Kühlmittelmantel gegenüberliegenden Seite des Abgaskrümmers angeordnet ist, aufweist, und
- beabstandet zum Abgaskrümmer an der den Zylindern abgewandten Seite des Abgaskrümmers in einer Außenwandung des Zylinderkopfes, aus der die Gesamtabgasleitung austritt, mindestens eine Verbindung zwischen dem unteren Kühlmittelmantel und dem oberen Kühlmittelmantel vorgesehen ist, die dem Durchtritt von Kühlmittel dient, wobei die mindestens eine Verbindung benachbart zu dem Bereich angeordnet ist, in dem die Abgasleitungen zu der Gesamtabgasleitung zusammenführen.

Damit ist im Zylinderkopf mindestens eine Verbindung der Kühlmittelmäntel auf der den Zylindern des Zylinderkopfes abgewandten Seite des integrierten Abgaskrümmers angeordnet. Die mindestens eine Verbindung liegt somit außerhalb des integrierten Abgaskrümmers. Bei der Verbindung handelt es sich um einen Kühlmittelkanal.

Vorteilhaft sind Ausführungsformen, bei denen der Abstand zwischen der mindestens einen Verbindung und der Gesamtabgasleitung kleiner ist als der Durchmesser, vorzugsweise kleiner ist als die Hälfte bzw. ein Viertel des Durchmessers eines Zylinders, wobei sich der Abstand als Wegstrecke zwischen der Außenwand der Gesamtabgasleitung und der Außenwand der mindestens einen Verbindung ergibt.

Vorteilhaft ist die Verwendung einer Anordnung nach einer der zuvor genannten Arten insbesondere bei einer aufgeladenen Brennkraftmaschine, da die an der Turbine gewonnene Energie auf diese Weise für die Aufladung der Brennkraftmaschine genutzt werden kann.

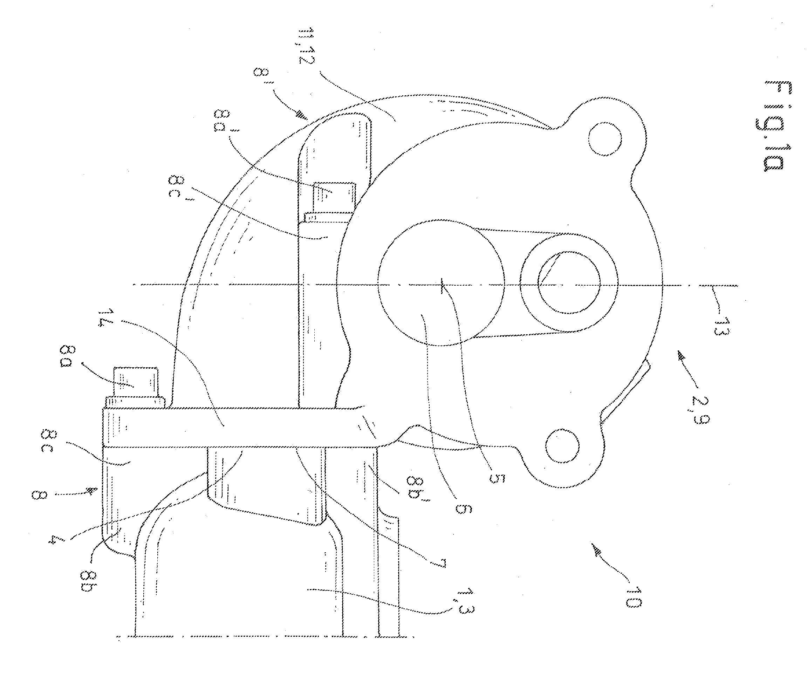

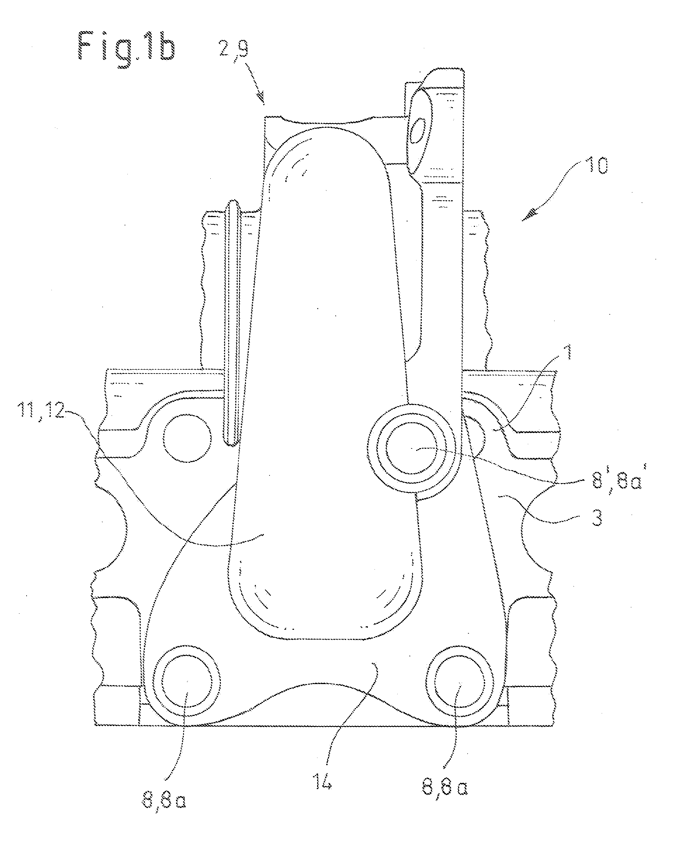

Im Folgenden wird die Erfindung anhand eines Ausführungsbeispieles gemäß den Figuren 1a und 1b näher beschrieben. Hierbei zeigt:
- Fig. 1a: zeigt schematisch in einer Seitenansicht eine erste Ausführungsform der Anordnung mit Zylinderkopf und Turbine, und
- Fig. 1b: zeigt schematisch die in Figur 2a dargestellte Ausführungsform in einer um 90 Grad gedrehten Ansicht.
- Figur 2: zeigt eine schematische Darstellung des Zylinderkopfes mit integriertem Abgaskrümmer und integriertem Turbinengehäuse für einen Abgasturbolader.
- Fig. 3: zeigt einen Schnitt durch einen erfindungsgemäßen Zylinderkopf
- Fig. 4: zeigt eine Seitenansicht der erfindungsgemäßen Anordnung von Zylinderkopf und Turbolader

Der Zylinderkopf 1 besteht aus einem gemeinsamen, einstückigen Gußteil mit Abgaskrümmer 3 und Turbolader 4. Da der Turbine 2 eines Turboladers, die direkt aus dem Abgaskrümmer 3 mit Abgas versorgt wird, entfällt der entsprechende Anschluß. Die Abgase verlassen die Turbinenseite daher durch den Anschluß 51. Die Verbrennungsluft wird durch den Stutzen 68 in den Kompressorteil 4 des Turboladers gesaugt, verdichtet und verläßt den Turbolader durch den Anschluß 78. Anschluß 78 kann zum Beispiel im Guß bereits so ausgerichtet sein, dass die verdichtete Luft z. B. durch den Ventildeckel dem Einlaßsystem des Motors zugeführt wird und weitere Rohre vermeidet.

Figur 1a zeigt schematisch in einer Seitenansicht eine erste Ausführungsform der Anordnung 10 mit Zylinderkopf 1 und Turbine 2.

Der Zylinderkopf 1 verfügt über einen integrierten Abgaskrümmer 3 zum Abführen von Abgasen über eine aus dem Zylinderkopf 1 austretende Gesamtabgasleitung 4. Die Turbine 2 weist einen Eintrittsbereich 7 zum Zuführen der Abgase auf, wobei der Eintrittsbereich 7 unmittelbar an die Gesamtabgasleitung 4 anschließt.

Ausgehend vom Eintrittsbereich 7 wird das Abgas via Spiralgehäuse 12 dem stromabwärts angeordneten und um eine Drehachse 5 drehbar gelagerten Laufrad 6 der Turbine 2 zugeführt. Die Turbine 2 ist eine Radialturbine 9.

Drei Schraubenverbindungen 8, 8' dienen dazu, die Turbine 2 mit dem Zylinderkopf 1 zu verbinden, wobei eine Schraubenverbindung 8' auf der dem Laufrad 6 zugewandten Seite des Eintrittsbereichs 7 und zwei Schraubenverbindungen 8 auf der dem Laufrad 6 abgewandten Seite des Eintrittsbereichs 7 vorgesehen sind.

Zur Ausbildung der drei Schraubenverbindungen 8, 8' mittels Schrauben 8a, 8a' weist der Zylinderkopf 1 drei um die Gesamtabgasleitung 4 herum und zur Gesamtabgasleitung 4 beabstandet angeordnete Bohrungen 8b, 8b' zur Aufnahme der Schrauben 8a, 8a' auf. Die Turbine 2 verfügt über drei um den Eintrittsbereich 7 herum angeordnete Butzen 8c, 8c' zum Durchführen der Schrauben 8a, 8a'. Das Turbinengehäuse 11 der Turbine 2 ist in der Nähe des Eintrittsbereichs 7 mit einem Flansch 14 ausgestattet, um die Butzen 8c, 8c' aufzunehmen bzw. auszubilden.

Die Butze 8c' der Schraubenverbindung 8', die auf der dem Laufrad 6 zugewandten Seite des Eintrittsbereichs 7 vorgesehen ist, ragt über die Drehachse 5 des Laufrades 6 hinaus nach außen hervor. D. h. das freie Ende dieser Butze 8c' liegt auf der dem Zylinderkopf 1 abgewandten Seite einer gedachten Ebene 13, welche durch die Drehachse 5 des Laufrades 6 der Turbine 2 geht und senkrecht auf den Schraubenverbindungen 8, 8' steht.

Dadurch rückt auch der Schraubenkopf dieser Schraubenverbindung 8' weiter nach außen und vom Eintrittsbereich 7 bzw. Zylinderkopf 1 weg. Zum Festziehen der dazugehörigen Schraube 8a' muß das Montagewerkzeug nicht mehr bis in die Nähe des Eintrittsbereichs 7 bzw. des Zylinderkopfes 1 eingeführt werden, um mit der Schraube 8a' in Eingriff gebracht zu werden.

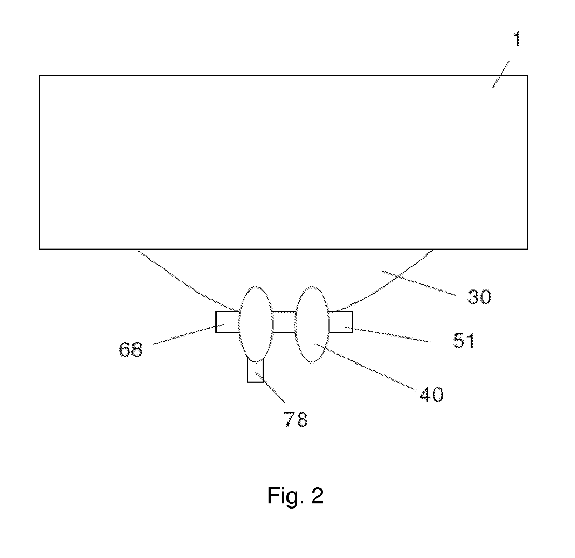

Der Zylinderkopf 1 besteht bevorzugt, wie in Fig. 2 dargestellt, aus einem gemeinsamen, einstückigen Gußteil mit Abgaskrümmer 3 und Turbolader 4. Da der Turbine 2 eines Turboladers, die direkt aus dem Abgaskrümmer 3 mit Abgas versorgt wird, entfällt der entsprechende Anschluß. Die Abgase verlassen die Turbinenseite daher durch den Anschluß 50. Die Verbrennungsluft wird durch den Stutzen 68 in den Kompressorteil 4 des Turboladers gesaugt, verdichtet und verläßt den Turbolader durch den Anschluß 78. Anschluß 78 kann zum Beispiel im Guß bereits so ausgerichtet sein, dass die verdichtete Luft z. B. durch den Ventildeckel dem Einlaßsystem des Motors zugeführt wird und weitere Rohre vermeidet.

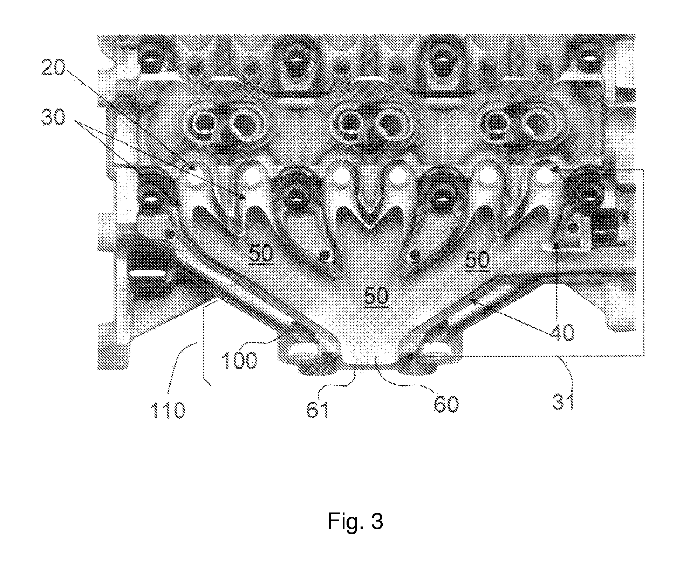

Wie in Fig. 3 dargestellt weist der Brennraum eines Zylinders im Zylinderkopf mit integriertem Abgassammler eine durch ein Auslassventil selektiv verschließbare Auslassöffnung 20 zur Abführung der Abgase auf. Die Abgase der einzelnen Auslassöffnungen 20 werden durch Abgasleitungen 30 geführt, die sich überwiegend innerhalb des Zylinderkopfes 100 zu bevorzugt einer Gesamtabgasleitung 60 vereinigen. wobei die im Zylinderkopf 100 vorgesehenen Abgaswege durch in der Nähe dieser Abgaswege vorgesehene Kühlmittelkanäle 40 flüssigkeitsgekühlt werden. Der am Zylinderkopf integrierte, hervorragende Bereich 110 wird ebenfalls flüssigkeitsgekühlt und dient im wesentlichen der gewichtsparenden Ausbildung einer Anschlussfläche für eine erste abgasdurchströmten Einrichtung. Der Bereich 110 kann zur verstärkten Flüssigkeitskühlung auch weniger stark hervorragen, insbesondere etwa fluchtend mit der Zylinderkopfaußenwand ausgebildet sein. Die Gesamtabgasleitung 60 geht außerhalb des Zylinderkopfes 100 in eine erste abgasdurchströmte Einrichtung über. Zur Optimierung von schneller Aufheizung der ersten abgasdurchströmte Einrichtung, welch hier beispielhaft als Turbolader dargestellt ist, und in Verbindung damit zur Absenkung von dessen maximalen Betriebstemperatur ist als Verhältnis der Flächensumme der Innenwandungen 50 der flüssigkeitsgekühlten Abgaswege im Zylinderkopf 100, gemessen von den Auslassöffnungen 20 bis zum Austritt 61 der bevorzugt einen Gesamtabgasleitung 60 aus dem Zylinderkopf 100, bezogen auf die Flächensumme der Innenwandungen der Abgaswege 50, gemessen von den Auslassöffnungen 20 bis zu einem Bezugselement der ersten abgasdurchströmten Einrichtung außerhalb des Zylinderkopfes, auf einen Wert ausgelegt, der mehr als 50%, bevorzugt mehr als 65%, besonders bevorzugt mehr als 80% und ganz besonders bevorzugt mehr als 85% beträgt. Die Innenwandungen 50 der flüssigkeitsgekühlten Abgaswege im Zylinderkopf 100, von den Auslassöffnungen 20 bis zum Austritt 61 der bevorzugt einen Gesamtabgasleitung 60 aus dem Zylinderkopf 100 werden als integrierter Abgaskrümmer 31 bezeichnet.

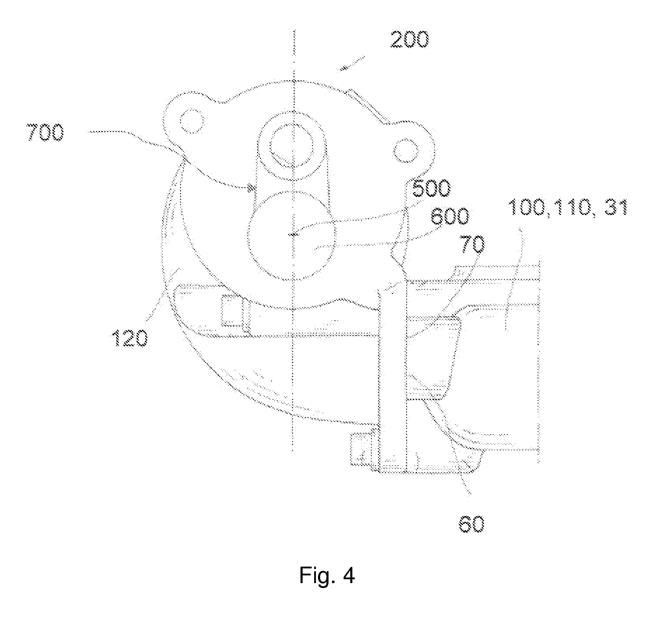

Wie in Fig. 4 dargestellt verfügt der Zylinderkopf 100 über einen integrierten Abgaskrümmer 31 zum Abführen von Abgasen über eine aus dem Zylinderkopf 100 austretende Gesamtabgasleitung 60. Die Turbine 200 weist einen Eintrittsbereich 70 zum Zuführen der Abgase auf, wobei der Eintrittsbereich 70 unmittelbar an die Gesamtabgasleitung 60 bzw. an deren Ende 61 anschließt.

Ausgehend vom Eintrittsbereich 70 wird das Abgas via Spiralgehäuse 120 dem stromabwärts angeordneten und um eine Drehachse 500 drehbar gelagerten Laufrad 600 der Turbine 200 zugeführt. Die Turbine 200 ist hier beispielhaft eine Radialturbine mit einer Schnecke 700.

Im Fall des beispielhaft dargestellten Turboladers ist das Bezugselement zu Bestimmung dieses Flächenverhältnisses der Anfangsbereich des Spiralgehäuses 120, also die Kontur, die den Übergang des Eintrittsbereichs 70 in das Spiralgehäuse darstellt.

## Patentansprüche

1. Brennkraftmaschine mit wenigstens zwei Zylindern und einem Zylinderkopf (1, 100) mit einem Abgaskrümmer (3), der eine an die Zylinderkopfaußenseite führende Gesamtabgasleitung (4, 60) aufweist, welche die von den Zylinder kommenden Abgasleitungen (30) und flüssigkeitsgekühlten Abgaswege (50) zusammenführt und an die in Strömungsrichtung fluchtend ein Eintrittsbereich (7, 70) eines Turbinengehäuses (11, 12, 120 ) einer vom Abgas angetriebenen Turbine (2, 200) anschließt,
**dadurch gekennzeichnet, daß** die Gesamtabgasleitung (6, 60) in Längsrichtung des Zylinderkopfes mittig zu den Zylindern angeordnet ist,
- die Turbinenachse oberhalb der Gesamtabgasleitung angeordnet ist und
- die der Brennkraftmaschine zugewandte, stromabwärts des Eintrittsbereichs (7, 70) gelegene Außenwand des Turbinengehäuses (11, 12, 120) im Wesentlichen bis an die Gesamtabgasleitung (4, 40) heranreicht.

2. Brennkraftmaschine nach Anspruch 1 oder 2, **dadurch gekennzeichnet, daß** die der Brennkraftmaschine zugewandte, stromabwärts des Eintrittsbereichs (7, 70) gelegene Außenwand des Turbinengehäuses (11, 12, 120) im Wesentlichen bis mit der Ebene fluchtet, welche durch eine Querschnittsfläche der Gesamtabgasleitung (4, 40) an der Zylinderkopfaußenseite verläuft.

3. Brennkraftmaschine nach Anspruch 1, **dadurch gekennzeichnet, daß** die der Brennkraftmaschine zugewandte, stromabwärts des Eintrittsbereichs (7, 70) gelegene Außenwand des Turbinengehäuses (11, 12, 120) im Wesentlichen über dem Bereich liegt, an dem in der Gesamtabgasleitung (4, 40) die von den Zylinder kommenden Abgasleitungen (30) und die flüssigkeitsgekühlten Abgaswege (50) zusammengeführt sind.

4. Brennkraftmaschine nach Anspruch 1, **dadurch gekennzeichnet, daß** die der Brennkraftmaschine zugewandte, stromabwärts des Eintrittsbereichs (7, 70) gelegene Außenwand des Turbinengehäuses (11, 12, 120) im Wesentlichen über den Bereich liegt, an dem in der Gesamtabgasleitung (4, 40) die von den Zylinder kommenden Abgasleitungen (30, 50) zusammengeführt sind.

5. Brennkraftmaschine nach Anspruch 4, **dadurch gekennzeichnet, daß** in das Turbinengehäuse (11, 12, 120) eine Flüssigkeitskühlung integriert ist.

6. Brennkraftmaschine nach Anspruch 5, **dadurch gekennzeichnet, daß** die Flüssigkeitskühlung mit einer Pumpe für den Kühlmittekreislauf verbunden ist.

7. Brennkraftmaschine nach Anspruch 5, **dadurch gekennzeichnet, daß** die Flüssigkeitskühlung mit dem Kühlkreislauf der flüssigkeitgekühlten Abgaswege (50) verbunden ist.

8. Brennkraftmaschine nach einem oder mehreren der vorhergehend Ansprüche,
**dadurch gekennzeichnet, daß** die Flächensumme der Innenwandungen der flüssigkeitsgekühlten Abgaswege (50) im Zylinderkopf 100, gemessen von den Auslassöffnungen (20) bis zum Austritt (61) der bevorzugt einen Gesamtabgasleitung (60) aus dem Zylinderkopf 100, mehr als 65%der Flächensumme der Innenwandungen der Abgaswege (50), gemessen von den Auslassöffnungen (20) bis zum Anfangsbereich des Spiralgehäuses (120), beträgt.

9. Brennkraftmaschine nach einem oder mehreren der Ansprüche 1-8, **dadurch gekennzeichnet, daß** der Eintrittsbereich (7, 70) eines Turbinengehäuses und die Gesamtabgasleitung (4, 40) einstückig als integrierter Bestandteil eines mit integriertem Abgaskrümmer (3) gebildet wird, der selbst in den Zylinderkopf (1, 100) integriert ist.

10. Brennkraftmaschine nach einem oder mehreren der Ansprüche 1-8, mit einer Turbine (2), die ein um eine Drehachse (5) drehbares Laufrad (6) und einen Eintrittsbereich (7) zum Zuführen der Abgase aufweist, bei der die Turbine (2) mit dem Zylinderkopf (1, 100) mittels Schrauben (8a, 8a') in der Art verbunden ist, daß der Eintrittsbereich (7) an die Gesamtabgasleitung (4) anschließt, wozu der Zylinderkopf (1) um die Gesamtabgasleitung (4) herum und zur Gesamtabgasleitung (4) beabstandet angeordnete Bohrungen (8b, 8b') zur Aufnahme der Schrauben (8a, 8a') aufweist und die Turbine (2) um den Eintrittsbereich (7) herum angeordnete Butzen (8c, 8c') zum Durchführen der Schrauben (8a, 8a') aufweist, wobei
- die Butzen (8c, 8c') und die Bohrungen (8b, 8b') miteinander fluchten,
- zur Ausbildung von mindestens drei Schraubenverbindungen (8, 8') mindestens drei Bohrungen (8b, 8b') und mindestens drei Butzen (8c, 8c') zur Aufnahme von mindestens drei Schrauben (8a, 8a') vorgesehen sind, und
- mindestens eine Schraubenverbindung (8') auf der dem Laufrad (6) zugewandten Seite des Eintrittsbereichs (7) vorgesehen ist,
**dadurch gekennzeichnet, daß**
- die Butze (8c') der mindestens einen Schraubenverbindung (8'), die auf der dem Laufrad (6) zugewandten Seite des Eintrittsbereichs (7) vorgesehen ist, über die Drehachse (5) des Laufrades (6) hinaus nach außen hervorsteht.

11. Brennkraftmaschine nach Anspruch 10, **dadurch gekennzeichnet, daß** drei Schraubenverbindungen (8, 8') vorgesehen sind.

12. Brennkraftmaschine nach Anspruch 10 oder 11, **dadurch gekennzeichnet, daß** eine Schraubenverbindung (8') auf der dem Laufrad (6) zugewandten Seite des Eintrittsbereichs (7) vorgesehen ist.

13. Brennkraftmaschine nach einem oder mehreren der Ansprüche 10-12, **dadurch gekennzeichnet, daß**
- der Zylinderkopf (1) mindestens zwei Zylinder aufweist,
- jeder Zylinder mindestens zwei Auslaßöffnungen aufweist, und
- die Abgasleitungen von mindestens zwei Zylindern unter Ausbildung des mindestens einen integrierten Abgaskrümmers (3) innerhalb des Zylinderkopfes (1) zu der Gesamtabgasleitung (4) zusammenführen.
